(19) Europäisches Patentamt / European Patent Office / Office européen des brevets

(11) **EP 3 437 948 A1**

(12) **EUROPEAN PATENT APPLICATION**
published in accordance with Art. 153(4) EPC

(43) Date of publication:
**06.02.2019 Bulletin 2019/06**

(51) Int Cl.:
***B60W 40/10*** (2012.01)

(21) Application number: **17774296.2**

(22) Date of filing: **14.03.2017**

(86) International application number:
**PCT/JP2017/010266**

(87) International publication number:
**WO 2017/169752 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.03.2016 JP 2016065962**

(71) Applicant: **Kyocera Corporation
Kyoto-shi, Kyoto 612-8501 (JP)**

(72) Inventors:
• **KIJIMA, Daisuke**
  **Kyoto-shi**
  **Kyoto 612-8501 (JP)**
• **ZHANG, Yun**
  **Kyoto-shi**
  **Kyoto 612-8501 (JP)**

(74) Representative: **Viering, Jentschura & Partner mbB
Patent- und Rechtsanwälte
Am Brauhaus 8
01099 Dresden (DE)**

(54) **DEVICE FOR DETECTING ORIENTATION OF VEHICLE, IMAGE PROCESSING SYSTEM, VEHICLE, AND METHOD FOR DETECTING ORIENTATION OF VEHICLE**

(57)     An orientation detection apparatus (13) includes an input/output interface (21) and a processor (23). The input/output interface (21) acquires a captured image of a wheel of a vehicle (11). The processor (23) detects the orientation of the vehicle (11) on the basis of the position of the wheel in the captured image.

*FIG. 2*

EP 3 437 948 A1

**Description**

CROSS-REFERENCE TO RELATED APPLICATION

The present application claims priority to and the benefit of Japanese Patent Application No. 2016-065962 filed March 29, 2016, the entire contents of which are incorporated herein by reference.

TECHNICAL FIELD

The present disclosure relates to an orientation detection apparatus for a vehicle, an image processing system, a vehicle, and an orientation detection method for a vehicle.

BACKGROUND

An imaging apparatus provided in a vehicle, such as an automobile, has been used for driving support. For example, patent literature (PTL) 1 discloses a configuration that, in accordance with a change in the tilt of a vehicle, determines a region to extract from a surrounding image or changes a position of an indicator to overlay on a surrounding image for driving support.

CITATION LIST

Patent Literature

PTL 1: JP2014078776A

SUMMARY

An orientation detection apparatus for a vehicle according to an embodiment of the present disclosure includes an input/output interface and a processor. The input/output interface acquires a captured image of a wheel of a vehicle. The processor detects the orientation of the vehicle on the basis of the position of the wheel in the captured image.

An image processing system according to an embodiment of the present disclosure includes an imaging apparatus, an orientation detection apparatus, and an image processing apparatus. The imaging apparatus generates a captured image of a wheel of a vehicle. The orientation detection apparatus detects an orientation of the vehicle on the basis of a position of the wheel in the captured image. The image processing apparatus determines, on the basis of the detected orientation, at least one of a position for overlaying an image on the captured image and an image processing range in the captured image.

A vehicle according to an embodiment of the present disclosure includes a wheel, an imaging apparatus, an orientation detection apparatus, and an image processing apparatus. The imaging apparatus generates a captured image of the wheel. The orientation detection apparatus detects an orientation of the vehicle on the basis of a position of the wheel in the captured image. The image processing apparatus determines, on the basis of the detected orientation, at least one of a position for overlaying an image on the captured image and an image processing range in the captured image.

An orientation detection method for a vehicle according to an embodiment of the present disclosure is executed by an orientation detection apparatus. The orientation detection method includes acquiring a captured image of a wheel of a vehicle and detecting an orientation of the vehicle on the basis of a position of the wheel in the captured image.

BRIEF DESCRIPTION OF THE DRAWINGS

In the accompanying drawings:

FIG. 1 is a schematic diagram of a vehicle, viewed from above, that includes an image processing system according to an embodiment of the present disclosure;
FIG. 2 is a block diagram illustrating the schematic configuration of an image processing system;
FIG. 3 is a schematic diagram of a vehicle, viewed from the left side, when a tilt $\alpha = 0$;
FIG. 4 is a schematic diagram of a vehicle, viewed from the left side, when the tilt $\alpha \neq 0$;
FIG. 5 illustrates an example of an image captured by a left-side camera when the tilt $\alpha = 0$;
FIG. 6 illustrates an example of an image captured by the left-side camera when the tilt $\alpha \neq 0$;
FIG. 7 illustrates an example of first correspondence information stored in a memory of an orientation detection apparatus;
FIG. 8 is a schematic diagram of a vehicle, viewed from the rear, when a tilt $\beta \neq 0$;
FIG. 9 is a flowchart illustrating operations of the orientation detection apparatus;
FIG. 10 is a flowchart illustrating operations of an image processing apparatus; and
FIG. 11 illustrates an example of second correspondence information stored in a memory of an orientation detection apparatus according to a modification to an embodiment.

DETAILED DESCRIPTION

Embodiments of the present disclosure are described below with reference to the drawings.

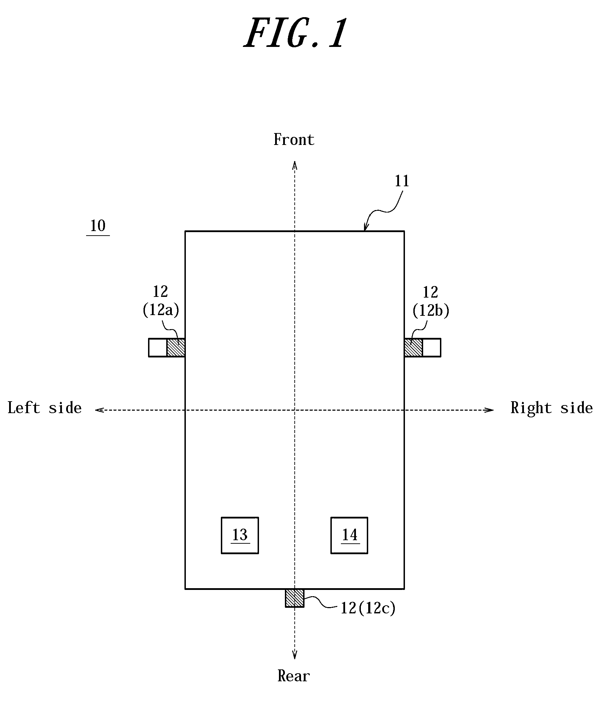

With reference to FIG. 1, a vehicle 11 that includes an image processing system 10 according to an embodiment of the present disclosure is described below. The image processing system 10 includes one or more imaging apparatuses 12, an orientation detection apparatus 13, and an image processing apparatus 14. The imaging apparatus 12, the orientation detection apparatus 13, and the image processing apparatus 14 are communicably connected to each other. The vehicle 11 in the present embodiment is an automobile that includes four wheels, for example, but it suffices for the vehicle 11 to include one or more wheels.

The imaging apparatus 12 is, for example, an on-vehicle camera capable of wide-angle shooting. The imaging apparatus 12 is, for example, installed in the vehicle 11. In the present embodiment, three imaging apparatuses 12 are installed in the vehicle 11. For example, the three imaging apparatuses 12 include a left-side camera 12a, a right-side camera 12b, and a rear camera 12c. When distinguishing between the three imaging apparatuses 12, the terms left-side camera 12a, right-side camera 12b, and rear camera 12c are used below.

The left-side camera 12a is installed on the left side of the vehicle 11 facing perpendicularly downward. The left-side camera 12a may, for example, be installed in the left side view mirror. The left-side camera 12a is installed to be capable of capturing an image of the exterior space on the left side of the vehicle 11, the left front wheel and the left rear wheel of the vehicle 11, and a portion of the vehicle 11 simultaneously. The portion of the vehicle 11 may, for example, include at least a portion of the left side of the vehicle body. Two left-side cameras 12a may be installed to be capable of capturing images respectively of the left front wheel and the left rear wheel of the vehicle 11.

The right-side camera 12b is installed on the right side of the vehicle 11 facing perpendicularly downward. The right-side camera 12b may, for example, be installed in the right side view mirror. The right-side camera 12b is installed to be capable of capturing an image of the exterior space on the right side of the vehicle 11, the right front wheel and the right rear wheel of the vehicle 11, and a portion of the vehicle 11 simultaneously. The portion of the vehicle 11 may, for example, include at least a portion of the right side of the vehicle body. Two right-side cameras 12b may be installed to be capable of capturing images respectively of the right front wheel and the right rear wheel of the vehicle 11. The left side view mirror and the right side view mirror may include an optical mirror. The left side view mirror and the right side view mirror may, for example, include an electronic mirror that uses a display or the like.

The rear camera 12c is installed at the rear of the vehicle 11 facing behind the vehicle 11. The rear camera 12c may, for example, be installed in the lower portion of the rear bumper of the vehicle 11. The rear camera 12c is installed to be capable of capturing an image of the exterior space behind the vehicle 11.

The number and arrangement of the imaging apparatuses 12 installed in the vehicle 11 are not limited to the above examples. For example, an additional imaging apparatus 12 may be installed in the vehicle 11. A front camera, for example, may be installed to be capable of capturing an image of the exterior space in front of the vehicle 11.

The orientation detection apparatus 13 is installed at any location in the vehicle 11. The orientation detection apparatus 13 detects the orientation of the vehicle 11 on the basis of captured images generated by the left-side camera 12a and the right-side camera 12b. The orientation of the vehicle 11 includes as least one of a tilt $\alpha$ in the front-back direction of the vehicle 11, a tilt $\beta$ in the left-right direction of the vehicle 11, and a height h of the vehicle 11. The front-back direction of the vehicle 11 is also referred to below as a first direction. The left-right direction of the vehicle 11 is also referred to as a second direction. The first direction and the second direction are not limited to the front-back direction and the left-right direction of the vehicle 11 and may be any directions that differ from each other. Specific operations by which the orientation detection apparatus 13 detects the orientation of the vehicle 11 are described below.

The orientation detection apparatus 13 outputs information indicating the detected orientation of the vehicle 11 to the image processing apparatus 14. The information indicating the orientation of the vehicle 11 is also referred to below as orientation information. The detected orientation of the vehicle 11 is used in the image processing executed by the image processing apparatus 14, as described below.

The image processing apparatus 14 is installed at any position in the vehicle 11. The image processing apparatus 14 performs predetermined image processing on the captured images generated by the imaging apparatuses 12. The predetermined image processing differs in accordance with the desired function for which the captured image is used.

For example, a driving support function when the vehicle 11 is in reverse is now described. The image processing apparatus 14 performs predetermined image processing on the captured image from the rear camera 12c. The image processing apparatus 14 outputs the captured image on which image processing has been performed to the vehicle 11 and, for example, causes a display apparatus provided in the vehicle 11 to display the image. The predetermined image processing includes processing to determine an image processing range in the captured image, a trimming process to cut out a portion in the image processing range, processing to overlay a support image on the cut out image to support the driver, and the like. The support image may, for example, include a guide line virtually indicating the trajectory of the vehicle 11.

For example, a driving support function at the time of merging onto a highway is now described. The image processing apparatus 14 performs predetermined image processing on the captured image generated by the right-side camera 12b, for example. The image processing apparatus 14 detects another vehicle in the surrounding area to the right and to the right rear of the vehicle 11. When another vehicle is detected, the image processing apparatus 14 notifies the vehicle 11 of the presence of the other vehicle, for example by causing a speaker included in the vehicle 11 to output a warning sound. The predetermined image processing includes processing to determine an image processing range in the captured image, object recognition processing to detect another vehicle in the image processing range, and the like.

For the above-described functions, the image processing apparatus 14 determines at least one of a position at which to overlay a support image on the captured image and an image processing range in the captured image on the basis of the orientation information acquired from the orientation detection apparatus 13. The position at which to overlay a support image on the captured image is also referred to below as an overlay position. With this configuration, the image processing apparatus 14 is capable of determining the overlay position and the image processing range in accordance with the orientation of the vehicle 11, as described below.

The imaging area of the imaging apparatuses 12 and the captured subject change in accordance with the orientation of the vehicle 11. For example, the imaging area of the imaging apparatuses 12 and the captured subject change in accordance with the tilt and the height of the vehicle 11. In a configuration with a fixed overlay position or image processing range within the captured image, for example, a change in the orientation of the vehicle 11 therefore causes misalignment, relative to the subject, of the image processing range subjected to trimming in the captured image from the rear camera 12c. The position of the support image overlaid on the subject may consequently become misaligned, reducing the usefulness of the driving support function. For example, a change in the orientation of the vehicle 11 may cause misalignment, relative to the subject, of the image processing range subjected to object recognition processing in the captured image from the right-side camera 12b. The recognition accuracy of the object recognition processing may therefore decrease, reducing the usefulness of the driving support function.

By contrast, the image processing apparatus 14 according to an embodiment of the present disclosure moves, changes the shape of, or rotates the image processing range in the captured image, for example, in accordance with the orientation of the vehicle 11. The image processing apparatus 14 can therefore reduce the misalignment, relative to the subject, of the image processing range due to a change in the orientation of the vehicle 11.

The image processing apparatus 14 is not limited to the above-described functions and may have a variety of functions that use a captured image. For example, the image processing apparatus 14 may have a function to generate an overhead image as follows. The image processing apparatus 14 cuts out a portion in an image processing range, determined on the basis of the orientation of the vehicle 11, from each of a plurality of captured images. The image processing apparatus 14 then subjects the cut out plurality of captured images to viewpoint conversion and combines the captured images to generate an overhead image of the exterior space around the entire vehicle 11.

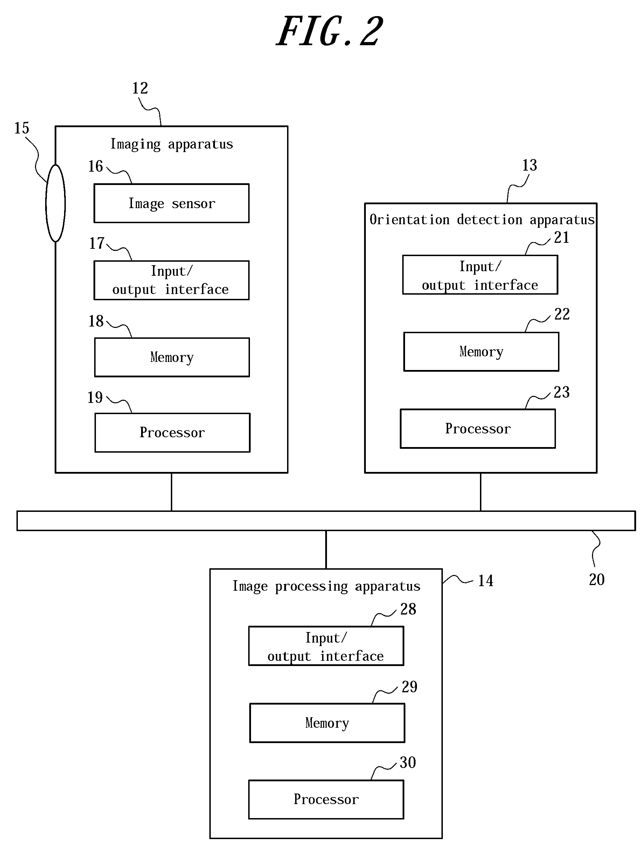

The components of the image processing system 10 are described in detail with reference to FIG. 2.

Configuration of Imaging Apparatus

The imaging apparatus 12 is now described. The imaging apparatus 12 includes an imaging optical system 15, an image sensor 16, an input/output interface 17, a memory 18, and a processor 19.

The imaging optical system 15 includes an optical member. The optical member may, for example, include one or more lenses, apertures, and the like. The imaging optical system 15 forms an image of a subject on an optical detection surface of the image sensor 16. For example, the imaging optical system 15 functions as a fisheye lens and has a relatively wide field of view.

The image sensor 16 includes a charge coupled device (CCD) image sensor, a complementary metal-oxide semiconductor (CMOS) image sensor, or the like, for example. A plurality of pixels are arrayed on the optical detection surface of the image sensor 16. The image sensor 16 generates a captured image by capturing the image of the subject formed on the optical detection surface.

The input/output interface 17 is an interface for input and output of information to and from external apparatuses over a network 20. The network 20 may, for example, be wired or wireless or may include a controller area network (CAN) or the like installed in the vehicle 11. The orientation detection apparatus 13 and the image processing apparatus 14 are included in external apparatuses. Examples of external apparatuses include an electronic control unit (ECU), display, navigation apparatus, and the like provided in the vehicle 11.

The memory 18 includes a primary memory device, a secondary memory device, and the like, for example. The memory 18 stores various information and programs necessary for operation of the imaging apparatus 12.

Examples of the processor 19 include a dedicated processor such as a digital signal processor (DSP) and a general-purpose processor such as a central processing unit (CPU). The processor 19 controls overall operations of the imaging apparatus 12.

For example, the processor 19 controls operations of the image sensor 16 to generate a captured image periodically, such as at 30 fps. The processor 19 performs predetermined image processing on the captured images generated by the image sensor 16. The predetermined image processing may include white balance adjustment, exposure adjustment, gamma correction, and the like. The predetermined image processing may be performed on the captured image of the current frame and may be performed on the captured image of the next or subsequent frame. The processor 19 outputs the captured image on which predetermined image processing has been performed to the orientation detection apparatus 13 and the image processing apparatus 14 through the input/output interface 17.

The processor 19 may be capable of transmitting and receiving a synchronization signal to and from other imaging apparatuses 12 through the input/output interface 17. The synchronization signal allows an imaging apparatus 12 to synchronize the image capture timing with one or more other imaging apparatuses 12. In the present embodiment, the image capture timing is synchronized between the left-side camera 12a, the right-side camera 12b, and the rear camera 12c.

Configuration of Orientation Detection Apparatus

The orientation detection apparatus 13 is now described. The orientation detection apparatus 13 includes an input/output interface 21, a memory 22, and a processor 23.

The input/output interface 21 is an interface for input and output of information to and from external apparatuses over the network 20. The imaging apparatus 12 and the image processing apparatus 14 are included in external apparatuses. Examples of external apparatuses include the ECU, display, navigation apparatus, and the like provided in the vehicle 11.

The memory 22 includes a primary memory device, a secondary memory device, and the like, for example. The memory 22 stores various information and programs necessary for operation of the orientation detection apparatus 13. For example, the memory 22 stores the below-described first correspondence information. Details of the information stored in the memory 22 are provided below.

Examples of the processor 23 include a dedicated processor such as a DSP and a general-purpose processor such as a CPU. The processor 23 controls overall operations of the orientation detection apparatus 13.

For example, the processor 23 acquires a captured image from at least one of the left-side camera 12a and the right-side camera 12b through the input/output interface 21. In the present embodiment, the processor 23 acquires a pair of captured images from the left-side camera 12a and the right-side camera 12b. The pair of captured images are captured images acquired at substantially the same timing by the left-side camera 12a and the right-side camera 12b, for which the image capture timing was synchronized.

The processor 23 detects the orientation of the vehicle 11 on the basis of the acquired captured images. Details are provided below.

Detection of Tilt $\alpha$

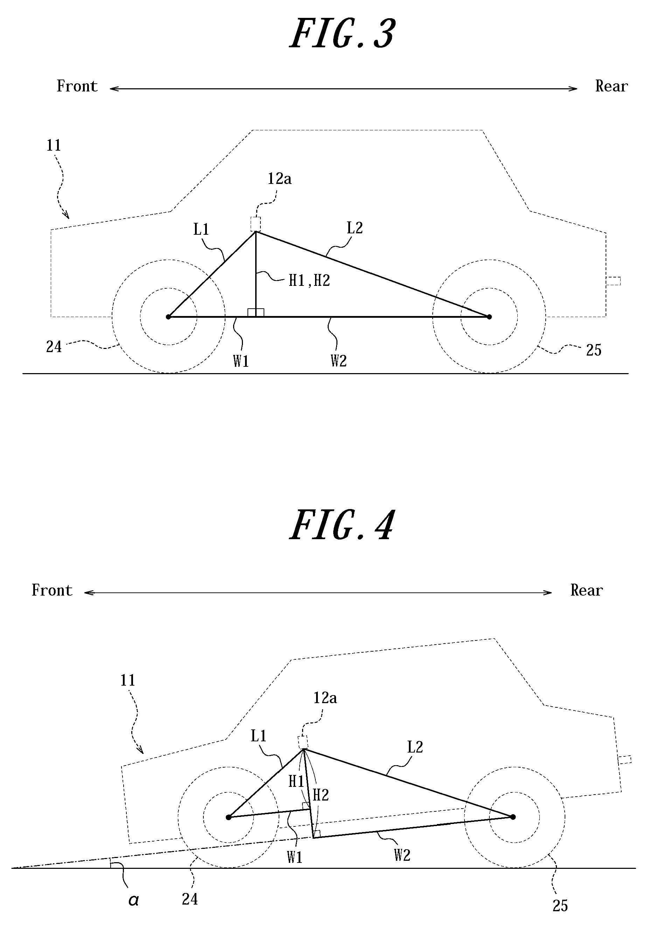

With reference to FIG. 3, the positional relationships between the left-side camera 12a, a left front wheel 24, and a left rear wheel 25 are described for when the tilt $\alpha$ in the front-back direction of the vehicle 11 is zero ($\alpha = 0$). The positional relationships between the left-side camera 12a, the left front wheel 24, and the left rear wheel 25 projected onto a plane that is parallel to the front-back direction of the vehicle 11 and perpendicular to the road are described.

A distance L1 is described below as being the distance between the left-side camera 12a and the left front wheel 24. A distance H1 is the component of the distance L1 in the optical axis direction of the left-side camera 12a. A distance W1 is the component of the distance L1 in a direction perpendicular to the optical axis of the left-side camera 12a. Accordingly, the distances L1, H1, and W1 satisfy Equation (1).

$$L1^2 = H1^2 + W1^2 \qquad (1)$$

A distance L2 is the distance between the left-side camera 12a and the left rear wheel 25. A distance H2 is the component of the distance L2 in the optical axis direction of the left-side camera 12a. A distance W2 is the component of the distance L2 in a direction perpendicular to the optical axis of the left-side camera 12a. Accordingly, the distances L2, H2, and W1 satisfy Equation (2).

$$L2^2 = H2^2 + W2^2 \qquad (2)$$

H1 = H2 when tilt $\alpha$ = 0.

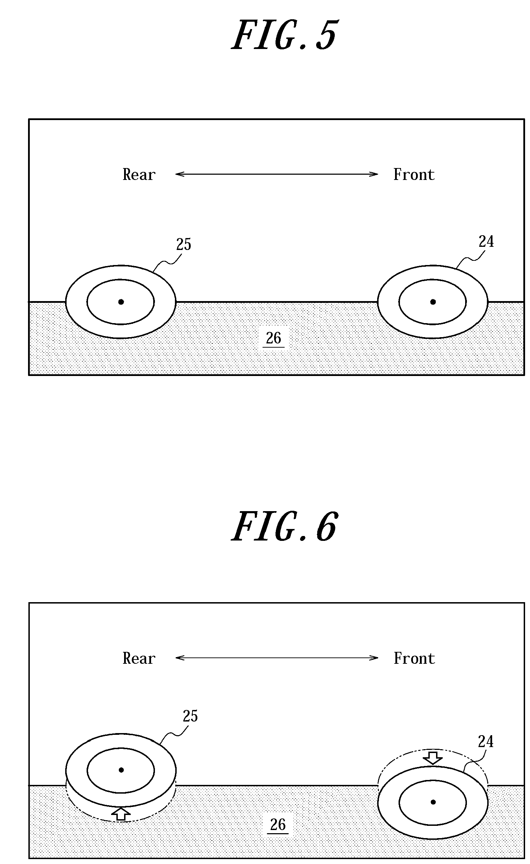

With reference to FIG. 4, the case when the tilt $\alpha$ in the front-back direction of the vehicle 11 no longer equals 0 ($\alpha \neq 0$) is described. FIG. 4 illustrates the state in which the vehicle 11 decelerates or stops when moving forward, for example. In this case, the front of the vehicle body sinks, and the rear of the vehicle body rises. The wheels at this time are assumed to be in contact with the road. The suspension between the wheels and the vehicle body deforms while the wheels remain in contact with the road, so that the vehicle body tilts relative to the road and to the wheels.

As described above, the imaging apparatus 12 is fixed to the body of the vehicle 11. Therefore, the positional relationships between the left-side camera 12a and the wheels change when tilt $\alpha \neq 0$ as compared to when tilt $\alpha$ = 0. Specifically, Equation (3) holds between the tilt $\alpha$ and the distances L1, L2, H1, H2, W1, and W2.

$$\tan\alpha = (H2 - H1)/(W1 + W2) \qquad (3)$$

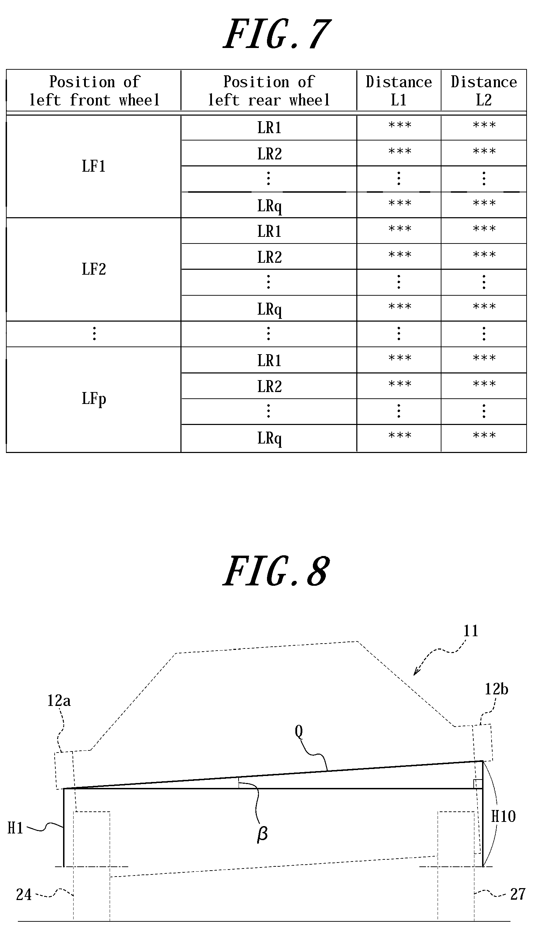

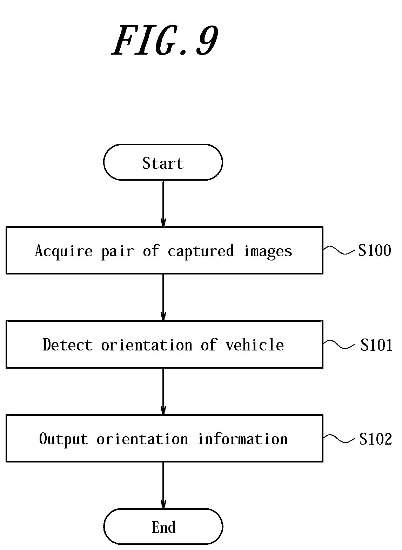

The image captured by the left-side camera 12a is described in detail. When tilt $\alpha$ = 0, then a portion 26 of the vehicle 11, the left front wheel 24, and the left rear wheel 25 are captured in the image, for example as illustrated in FIG. 5. The portion 26 of the vehicle 11 may, for example, include at least a portion of the left side of the vehicle body. When tilt $\alpha \neq 0$, for example as illustrated in FIG. 6, then although the position of the portion 26 of the vehicle 11 in the captured image does not change, the positions of the left front wheel 24 and the left rear wheel 25, which move relative to the vehicle body, change in the captured image. The positions of the left front wheel 24 and the left rear wheel 25 change in the captured image in accordance with the tilt $\alpha$.

When the tilt $\alpha$ changes over a relatively small range, then the distance W1 and the distance W2 can be considered to be constants, since the change in the tilt $\alpha$ is minute. In the present embodiment, the memory 22 of the orientation detection apparatus 13 stores the distance W1 and the distance W2 at tilt $\alpha$ = 0 in advance.

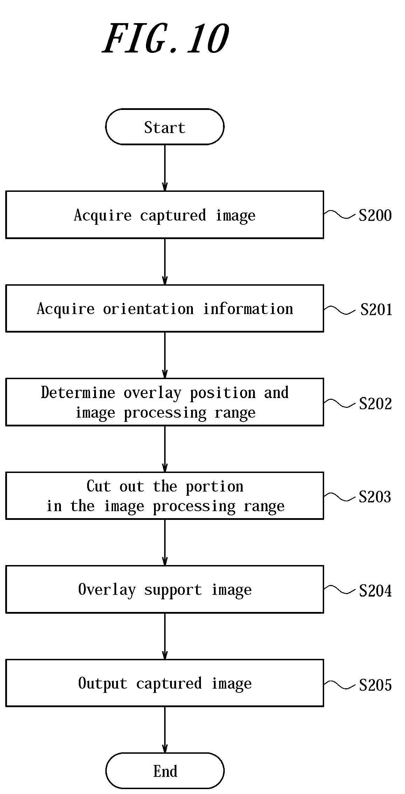

The memory 22 stores first correspondence information indicating the correspondence relationship between the position of each wheel in the captured image and a parameter used to detect the orientation of the vehicle 11. The position of each wheel in the captured image may be the absolute position of the wheel in the captured image or the relative position of the wheel relative to the portion 26 of the vehicle 11 in the captured image. The first correspondence information includes, for example, first correspondence information for the left-side camera 12a and first correspondence information for the right-side camera 12b. For example, the first correspondence information for the left-side camera 12a indicates the correspondence relationship between (i) the positions of the left front wheel 24 and the left rear wheel 25 in the captured image and (ii) the distances L1 and L2, as illustrated in FIG. 7. Since the first correspondence information for the right-side camera 12b is similar to the first correspondence information for the left-side camera 12a, a description is omitted. The first correspondence information can be determined in advance by experiment or simulation, for example.

The processor 23 of the orientation detection apparatus 13 detects the position of each wheel in the captured image acquired from the left-side camera 12a. For example, the processor 23 detects the positions of the left front wheel 24 and the left rear wheel 25 in the captured image. Any algorithm may be used to detect the wheels, such as an algorithm for performing edge detection on the captured image and detecting elliptical shapes in the captured image as wheels.

The processor 23 extracts the distance L1 and the distance L2 corresponding to the detected positions of the left front wheel 24 and the left rear wheel 25. The processor 23 uses the extracted distances L1 and L2 and the distances W1 and W2 stored in the memory 22 to calculate the tilt $\alpha$ from $\tan\alpha$ calculated with the above-described Equations (1) to (3).

The algorithm for calculating the tilt $\alpha$ is not limited to the above-described algorithm. For example, the first correspondence information may be information indicating the correspondence relationship between the positions of the left front wheel 24 and the left rear wheel 25 in the captured image and the distances W1, W2, H1, and H2. In this case, the processor 23 extracts a parameter corresponding to the position of each wheel of the vehicle 11 and uses the extracted parameter to calculate the tilt $\alpha$, which is the calculation result of the above-described algorithm. The first correspondence information may be information indicating the correspondence relationship between (i) the positions of the left front wheel 24 and the left rear wheel 25 in the captured image and (ii) the tilt $\alpha$. In this case, the processor 23 extracts the tilt $\alpha$ corresponding to the position of each wheel of the vehicle 11.

As described above, the processor 23 detects the tilt $\alpha$ in the front-back direction of the vehicle 11 on the basis of the captured image from the left-side camera 12a.

To calculate the below-described tilt $\beta$, the processor 23 calculates distances L10, L20, H10, H20, W10, and W20 on the basis of the captured image from the right-side camera 12b, as in the above-described case of using the captured image from the left-side camera 12a. The distance L10 is the distance between the right-side camera 12b and the right front wheel. The distance H10 is the component of the distance L10 in the optical axis direction of the right-side camera 12b. The distance W10 is the component of the distance L10 in a direction perpendicular to the optical axis of the right-side camera 12b. The distance L20 is the distance between the right-side camera 12b and the right rear wheel. The distance H20 is the component of the distance L20 in the optical axis direction of the right-side camera 12b. The distance W20 is the component of the distance L20 in a direction perpendicular to the optical axis of the right-side camera 12b.

Detection of Tilt $\beta$

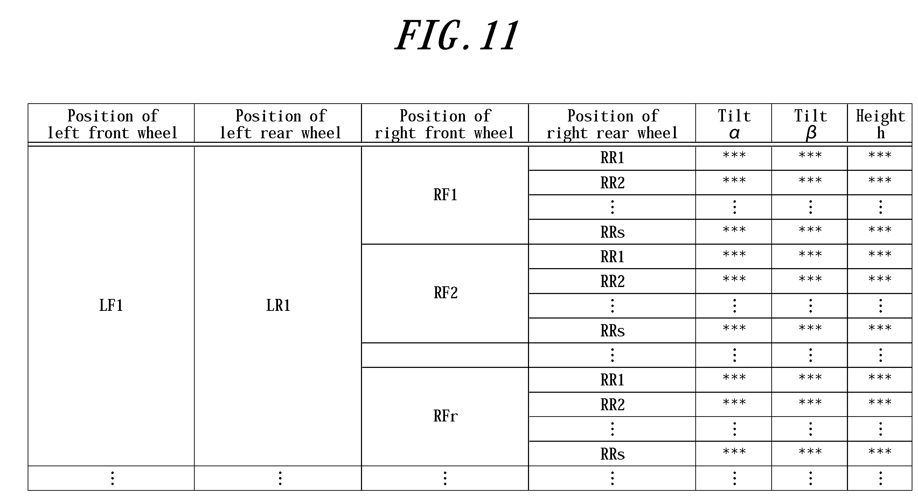

With reference to FIG. 8, the positional relationships between the left-side camera 12a, the right-side camera 12b, the left front wheel 24, and a right front wheel 27 are described for when the tilt $\beta$ in the left-right direction of the vehicle 11 is not zero ($\beta \neq 0$). The positional relationships between the left-side camera 12a, the right-side camera 12b, the left front wheel 24, and the right front wheel 27 projected onto a plane that is parallel to the left-right direction of the vehicle 11 and perpendicular to the road are described.

A distance Q is described below as being the distance between the left-side camera 12a and the right-side camera 12b in the left-right direction of the vehicle 11. In the present embodiment, the memory 22 of the orientation detection apparatus 13 stores the distance Q in advance.

Equation (4) below holds between the distance H1 calculated on the basis of the captured image from the left-side camera 12a, the distance H10 calculated on the basis of the captured image from the right-side camera 12b, and the above-described distance Q.

$$\sin\beta = (H10 - H1)/Q \qquad (4)$$

The processor 23 of the orientation detection apparatus 13 uses the distance H1 and distance H10 calculated as described above and the distance Q stored in the memory 22 to calculate the tilt $\beta$ from $\sin\beta$ calculated with the above-described Equation (4).

Detection of Height h

The processor 23 may calculate the height h of the vehicle 11 on the basis of a plurality of parameters calculated as described above. In the present embodiment, the plurality of parameters include the tilt $\alpha$, the tilt $\beta$, and the distances L1, L2, H1, H2, W1, W2, L10, L20, H10, H20, W10, and W20. The height h may, for example, be the height from the road to any position of the vehicle 11. The height h may furthermore be calculated on the basis of any vehicle constant. The vehicle constant may, for example, include the dimensions of the vehicle 11.

As the orientation of the vehicle 11, the processor 23 detects the tilt $\alpha$, tilt $\beta$, and height h calculated as described above. The processor 23 may determine that the average of each of the tilt $\alpha$, tilt $\beta$, and height h, calculated for the current frame and a predetermined number of past frames is the orientation of the vehicle 11. The processor 23 outputs orientation information indicating the orientation of the vehicle 11 to the image processing apparatus 14. The orientation information may include information indicating the tilt $\alpha$, tilt $\beta$, and height h.

Configuration of Image Processing Apparatus

The image processing apparatus 14 is described with reference to FIG. 2. The image processing apparatus 14 includes an input/output interface 28, a memory 29, and a processor 30.

The input/output interface 28 is an interface for input and output of information to and from external apparatuses over a network 20. The imaging apparatus 12 and the orientation detection apparatus 13 are included in external apparatuses. Examples of external apparatuses include the ECU, display, navigation apparatus, and the like provided in the vehicle 11.

The memory 29 includes a primary memory device, a secondary memory device, and the like, for example. The memory 29 stores various information and programs necessary for operation of the image processing apparatus 14.

Examples of the processor 30 include a dedicated processor such as a DSP and a general-purpose processor such as a CPU. The processor 30 controls overall operations of the image processing apparatus 14.

The processor 30 acquires captured images from one or more imaging apparatuses 12 and the orientation information from the orientation detection apparatus 13 through the input/output interface 28. In accordance with the orientation of the vehicle 11, the processor 30 determines at least one of an overlay position for overlaying a support image on the captured image and an image processing range in the captured image. The processor 30 moves the overlay position when the orientation of the vehicle 11 changes. The processor 30 moves, changes the shape of, or rotates the image processing range when the orientation of the vehicle 11 changes.

Specifically, the processor 30 determines the overlay position and the image processing range in accordance with the orientation of the vehicle 11 so as to maintain the relative positional relationships, relative to the subject, that the image processing range has in a reference state. The reference state may, for example, include a state in which tilt $\alpha = 0$, tilt $\beta = 0$, and the height h is a predetermined reference value. When the rear of the vehicle 11 rises, the tilt $\alpha$ increases. When the tilt $\alpha$ increases, the subject in the captured image from the rear camera 12c moves downward in the captured image. In this case, the processor 30 moves the overlay position and the image processing range downward in the captured image. In accordance with a change in the position of the vehicle 11, the processor 30 thus determines the overlay position and the image processing range in the captured image so as to reduce misalignment of the subject in the captured image. This configuration allows a reduction in misalignment, relative to the subject, of the overlay position and the image processing range.

To execute a driving support function when the vehicle 11 is in reverse, for example, the processor 30 cuts out a portion in an image processing range from the image captured by the rear camera 12c and overlays a support image at the overlay position. The processor 30 outputs the captured image with the support image overlaid thereon to the vehicle 11. The output captured image is displayed on a display apparatus provided in the vehicle 11, for example.

To execute a driving support function for merging onto a highway, for example, the processor 30 may perform object recognition processing to detect another vehicle in the image processing range of the captured image from the right-side camera 12b. When another vehicle is detected, the processor 30 notifies the vehicle 11 of the existence of the other vehicle. In response to the notification of the existence of another vehicle, a warning sound is output from a speaker included in the vehicle 11, for example.

The above-described operations of the orientation detection apparatus 13 are explained with reference to FIG. 9. These operations may, for example, be performed on each frame in which a captured image is generated or may be performed periodically at predetermined intervals.

Step S100: the processor 23 of the orientation detection apparatus 13 acquires a pair of captured images from the left-side camera 12a and the right-side camera 12b.

Step S101: the processor 23 detects the orientation of the vehicle 11 on the basis of the pair of captured images acquired in step S100 and the first information stored in the memory 22. As the orientation of the vehicle 11, the processor 23 detects at least one of the tilt $\alpha$, tilt $\beta$, and height h, for example. As the orientation of the vehicle 11, the processor 23 may detect the average of each of the tilt $\alpha$, tilt $\beta$, and height h calculated for the current frame and a predetermined number of past frames.

Step S102: the processor 23 outputs orientation information indicating the orientation of the vehicle 11 detected in step S101 to the image processing apparatus 14.

The above-described operations of the image processing apparatus 14 are explained with reference to FIG. 10. An example of operations related to a driving support function when the vehicle 11 is in reverse is described here. These operations may, for example, be performed on each frame in which a captured image is generated or may be performed periodically at predetermined intervals.

Step S200: the processor 30 of the image processing apparatus 14 acquires a captured image from the rear camera 12c.

Step S201: the processor 30 acquires the orientation information indicating the orientation of the vehicle 11 from the orientation detection apparatus 13.

Step S202: in accordance with the orientation of the vehicle 11 indicated by the orientation information acquired in step S201, the processor 30 determines at least one of the overlay position and the image processing range. The processor 30 may store the overlay position or the image processing range determined for each captured image in the memory 29 in association with the imaging apparatus 12 that generated the captured image. Here, both the overlay position and the image processing range are described as being determined.

Step S203: the processor 30 cuts out the portion in the image processing range from the captured image.

Step S204: the processor 30 overlays the support image at the overlay position of the cut out captured image.

Step S205: the processor 30 outputs the captured image on which the support image was overlaid in step S204 to the vehicle 11.

A technique for providing a tilt sensor in an imaging apparatus to detect the tilt of the vehicle is known. However, providing a tilt sensor or other such extra component in the imaging apparatus can lead to a larger size and higher cost of the imaging apparatus. A configuration for detecting the orientation of a vehicle, such as the tilt of the vehicle, thus has room for improvement.

By contrast, the orientation detection apparatus 13 according to an embodiment of the present disclosure acquires a captured image of a wheel of the vehicle 11 and detects the orientation of the vehicle 11 on the basis of the position of the wheel in the captured image. For example, the orientation detection apparatus 13 acquires the captured image from the left-side camera 12a and detects the tilt $\alpha$ as the orientation of the vehicle 11 on the basis of the position of the wheel in the captured image. The orientation of the vehicle 11 can thus be detected without adding a component such as a tilt sensor to the imaging apparatus 12.

The orientation detection apparatus 13 may acquire a plurality of captured images and calculate the orientation of the vehicle 11 on the basis of the position of a plurality of wheels in the plurality of captured images. For example, this configuration allows the orientation $\alpha$, orientation $\beta$, and height h to be detected as the orientation of the vehicle 11 on the basis of the position of four wheels in the captured image from the left-side camera 12a and the captured image from the right-side camera 12b. The detection accuracy of the orientation of the vehicle 11 thus increases.

The orientation detection apparatus 13 may store first correspondence information indicating the correspondence relationship between the position of a wheel in the captured image and a parameter used to detect the orientation of the vehicle 11. The parameter may, for example, include the distance L1 and the distance L2. This configuration allows extraction of a corresponding parameter from the first correspondence information if the position of a wheel in the captured image is detected. Therefore, this configuration can reduce the processing load and increase the processing speed as compared to a configuration for calculating the distance L1 and the distance L2 using a captured image, for example.

The present disclosure is based on the drawings and on embodiments, but it should be noted that a person of ordinary skill in the art could easily make a variety of modifications and adjustments on the basis of the present disclosure. Therefore, such changes and modifications are to be understood as included within the scope of the present disclosure. For example, the functions and the like included in the various means and steps may be reordered in any logically consistent way. Furthermore, means or steps may be combined into one or divided.

For example, a portion or all of the functions of the processor 23 in the orientation detection apparatus 13 may be implemented in another apparatus capable of communicating with the orientation detection apparatus 13, such as the imaging apparatus 12. For example, the orientation detection apparatus 13 itself may be included within one imaging apparatus 12. Similarly, a portion or all of the functions of the processor 30 in the image processing apparatus 14 may be implemented in another apparatus capable of communicating with the image processing apparatus 14, such as the imaging apparatus 12. For example, the image processing apparatus itself may be included within one imaging apparatus 12.

In the above embodiment, the orientation detection apparatus 13 has been described as detecting the orientation of the vehicle 11 on the basis of the first correspondence information, but the configuration for detecting the orientation of the vehicle 11 is not limited to this example. The memory 22 of the orientation detection apparatus 13 may, for example, store second correspondence information instead of the first correspondence information.

The second correspondence information is information indicating the correspondence relationship between (i) the positions of a plurality of wheels in a plurality of captured images and (ii) the orientation of the vehicle 11. For example, as illustrated in FIG. 11, the second correspondence information may be information indicating the correspondence relationship between (i) the positions of the left front wheel, the left rear wheel, the right front wheel, and the right rear wheel in the captured image from the left-side camera 12a and the captured image from the right-side camera 12b and (ii) the tilt $\alpha$, tilt $\beta$, and height h.

The second correspondence information may be information indicating the correspondence relationship between (i) the positions of the left or right front and rear wheels in the captured image from the left-side camera 12a or the right-side camera 12b and (ii) the tilt $\alpha$. The second correspondence information may be information indicating the correspondence relationship between (i) the positions of three wheels in the captured image from the left-side camera 12a and the captured image from the right-side camera 12b and (ii) the tilt $\alpha$, tilt $\beta$, and height h. The three wheels may, for example, include the left front wheel 24, the left rear wheel 25, and the right front wheel 27.

The above-described configuration in which the second correspondence information is stored allows the orientation detection apparatus 13 to extract the orientation of the vehicle 11 directly from the second correspondence information once the positions of a plurality of wheels are detected in one or more captured images. Therefore, this configuration can reduce the processing load and increase the processing speed.

In the above embodiment, the orientation detection apparatus 13 may stop detecting the orientation of the vehicle 11 when the vehicle 11 is in a particular state. For example, the orientation detection apparatus 13 may stop detecting the orientation of the vehicle 11 when the vehicle 11 is in a state such that the detection accuracy of the orientation might decrease. When, for example, the vehicle 11 is driven off road or on another such non-flat surface, one or more wheels may momentarily separate from the road. In this case, the detection accuracy of the orientation of the vehicle 11 may decrease. Specifically, the orientation detection apparatus 13 acquires a variety of vehicle information indicating the state of the vehicle 11 from the vehicle 11 over the network 20. The vehicle information may, for example, include information indicating vibration of the vehicle 11. In this case, the orientation detection apparatus 13 stops detection of the orientation of the vehicle 11 when judging that the amplitude of vibration of the vehicle 11 is equal to or greater than a predetermined threshold. The vehicle information may, for example, include information indicating the state of the road on which the vehicle 11 is being driven. In this case, the orientation detection apparatus 13 stops detection of the orientation of the vehicle 11 when judging that the road is not flat or when judging that the vehicle 11 is off road.

In the above embodiment, the operations that the image processing system 10 performs using the left-side camera 12a may be performed using the right-side camera 12b instead. For example, the terms "left-side camera 12a", "left", and the like in the above embodiment may be replaced with "right-side camera 12b", "right", and the like.

In the above embodiment, the tilt $\alpha$ in the front-back direction of the vehicle 11 is detected as the orientation of the vehicle 11 on the basis of the positions of the left front wheel 24 and the left rear wheel 25 in the captured image from the left-side camera 12a, but the method of detecting the orientation of the vehicle 11 is not limited to this configuration. The tilt in the first direction can be calculated on the basis of the positions, in one or more captured images, of any two wheels among the four wheels of the vehicle 11. Similarly, the tilt in the first direction, the tilt in the second direction, and the height of the vehicle 11 can be calculated on the basis of the positions, in one or more captured images, of any three wheels among the four wheels of the vehicle 11.

The components of the image processing system 10 according to the above embodiment may be implemented as an information processing apparatus, such as a mobile phone or a smartphone, and may be connected to the vehicle 11 by a wired or wireless connection.

REFERENCE SIGNS LIST

| | |
|---|---|
| 10 | Image processing system |
| 11 | Vehicle |
| 12 | Imaging apparatus |
| 12a | Left-side camera |
| 12b | Right-side camera |
| 12c | Rear camera |
| 13 | Orientation detection apparatus |
| 14 | Image processing apparatus |
| 15 | Imaging optical system |
| 16 | Image sensor |
| 17 | Input/output interface |
| 18 | Memory |
| 19 | Processor |
| 20 | Network |
| 21 | Input/output interface |
| 22 | Memory |
| 23 | Processor |
| 24 | Left front wheel |
| 25 | Left rear wheel |
| 26 | Portion of vehicle |
| 27 | Right front wheel |
| 28 | Input/output interface |
| 29 | Memory |
| 30 | Processor |

**Claims**

1. An orientation detection apparatus for a vehicle, the orientation detection apparatus comprising:

   an input/output interface configured to acquire a captured image of a wheel of a vehicle; and
   a processor configured to detect an orientation of the vehicle on the basis of a position of the wheel in the captured image.

2. The orientation detection apparatus of claim 1, wherein the processor is configured to detect the orientation of the vehicle on the basis of an absolute position of the wheel in the captured image.

**3.** The orientation detection apparatus of claim 1, wherein
the captured image is an image of the wheel and a portion of the vehicle; and
the processor is configured to detect the orientation of the vehicle on the basis of a relative position of the wheel relative to the portion of the vehicle in the captured image.

**4.** The orientation detection apparatus of any one of claims 1 to 3, wherein
the input/output interface is configured to acquire a plurality of the captured images of a plurality of the wheels; and
the processor is configured to detect the orientation of the vehicle on the basis of positions of the plurality of the wheels in the plurality of the captured images.

**5.** The orientation detection apparatus of any one of claims 1 to 4, wherein as the orientation of the vehicle, the processor is configured to detect at least one of a tilt of the vehicle in a first direction, a tilt of the vehicle in a second direction, and a height of the vehicle.

**6.** The orientation detection apparatus of any one of claims 1 to 5, further comprising:

a memory configured to store first correspondence information indicating a correspondence relationship between the position of the wheel in the captured image and a parameter used to detect the orientation of the vehicle; wherein
the processor is configured to extract a parameter corresponding to the position of the wheel in the captured image on the basis of the first correspondence information and to determine that a result of calculation using the parameter is the orientation of the vehicle.

**7.** The orientation detection apparatus of any one of claims 1 to 5, further comprising:

a memory configured to store second correspondence information indicating a correspondence relationship between the position of the wheel in the captured image and orientation information indicating the orientation of the vehicle; wherein
the processor is configured to acquire the orientation information corresponding to the position of the wheel in the captured image on the basis of the second correspondence information and to determine that the orientation indicated by the orientation information is the orientation of the vehicle.

**8.** An image processing system comprising:

an imaging apparatus configured to generate a captured image of a wheel of a vehicle;
an orientation detection apparatus configured to detect an orientation of the vehicle on the basis of a position of the wheel in the captured image; and
an image processing apparatus configured to determine, on the basis of the detected orientation, at least one of a position for overlaying an image on the captured image and an image processing range in the captured image.

**9.** A vehicle comprising:

a wheel;
an imaging apparatus configured to generate a captured image of the wheel;
an orientation detection apparatus configured to detect an orientation of the vehicle on the basis of a position of the wheel in the captured image; and
an image processing apparatus configured to determine, on the basis of the detected orientation, at least one of a position for overlaying an image on the captured image and an image processing range in the captured image.

**10.** An orientation detection method for a vehicle executed by an orientation detection apparatus, the orientation detection method comprising:

acquiring a captured image of a wheel of a vehicle; and
detecting an orientation of the vehicle on the basis of a position of the wheel in the captured image.

# FIG. 1

Front

11

10

12
(12a)

12
(12b)

Left side ← - - - - - - - - - - - - - - - - - - - - - - → Right side

13    14

12(12c)

Rear

# FIG.2

Imaging apparatus 12

16 Image sensor

17 Input/ output interface

18 Memory

19 Processor

15

Orientation detection apparatus 13

21 Input/ output interface

22 Memory

23 Processor

Image processing apparatus 14

28 Input/ output interface

29 Memory

30 Processor

20

# *FIG.3*

Front ← → Rear

# *FIG.4*

Front ← → Rear

# FIG. 5

Rear ⟷ Front

25

24

26

# FIG. 6

Rear ⟷ Front

25

24

26

## FIG. 7

| Position of left front wheel | Position of left rear wheel | Distance L1 | Distance L2 |
|---|---|---|---|
| LF1 | LR1 | *** | *** |
|  | LR2 | *** | *** |
|  | ⋮ | ⋮ | ⋮ |
|  | LRq | *** | *** |
| LF2 | LR1 | *** | *** |
|  | LR2 | *** | *** |
|  | ⋮ | ⋮ | ⋮ |
|  | LRq | *** | *** |
| ⋮ | ⋮ | ⋮ | ⋮ |
| LFp | LR1 | *** | *** |
|  | LR2 | *** | *** |
|  | ⋮ | ⋮ | ⋮ |
|  | LRq | *** | *** |

## FIG. 8

# FIG.9

```
        ┌─────────────┐
        │    Start     │
        └──────┬──────┘
               │
               ▼
   ┌──────────────────────────────┐
   │ Acquire pair of captured images │ ～S100
   └──────────────┬───────────────┘
                  │
                  ▼
   ┌──────────────────────────────┐
   │  Detect orientation of vehicle │ ～S101
   └──────────────┬───────────────┘
                  │
                  ▼
   ┌──────────────────────────────┐
   │ Output orientation information │ ～S102
   └──────────────┬───────────────┘
                  │
                  ▼
        ┌─────────────┐
        │     End      │
        └─────────────┘
```

# FIG. 10

```
          ┌─────────────┐
          │    Start    │
          └──────┬──────┘
                 │
                 ▼
    ┌────────────────────────────┐
    │   Acquire captured image    │ ⌇ S200
    └──────────────┬─────────────┘
                   │
                   ▼
    ┌────────────────────────────┐
    │ Acquire orientation information │ ⌇ S201
    └──────────────┬─────────────┘
                   │
                   ▼
    ┌────────────────────────────┐
    │ Determine overlay position and │ ⌇ S202
    │    image processing range   │
    └──────────────┬─────────────┘
                   │
                   ▼
    ┌────────────────────────────┐
    │     Cut out the portion     │ ⌇ S203
    │ in the image processing range │
    └──────────────┬─────────────┘
                   │
                   ▼
    ┌────────────────────────────┐
    │    Overlay support image    │ ⌇ S204
    └──────────────┬─────────────┘
                   │
                   ▼
    ┌────────────────────────────┐
    │    Output captured image    │ ⌇ S205
    └──────────────┬─────────────┘
                   │
                   ▼
          ┌─────────────┐
          │     End     │
          └─────────────┘
```

## FIG. 11

| Position of left front wheel | Position of left rear wheel | Position of right front wheel | Position of right rear wheel | Tilt $\alpha$ | Tilt $\beta$ | Height h |
|---|---|---|---|---|---|---|
| LF1 | LR1 | RF1 | RR1 | *** | *** | *** |
| | | | RR2 | *** | *** | *** |
| | | | ⋮ | ⋮ | ⋮ | ⋮ |
| | | | RRs | *** | *** | *** |
| | | RF2 | RR1 | *** | *** | *** |
| | | | RR2 | *** | *** | *** |
| | | | ⋮ | ⋮ | ⋮ | ⋮ |
| | | | RRs | *** | *** | *** |
| | | | ⋮ | ⋮ | ⋮ | ⋮ |
| | | RFr | RR1 | *** | *** | *** |
| | | | RR2 | *** | *** | *** |
| | | | ⋮ | ⋮ | ⋮ | ⋮ |
| | | | RRs | *** | *** | *** |
| ⋮ | ⋮ | ⋮ | ⋮ | ⋮ | ⋮ | ⋮ |

EP 3 437 948 A1

## INTERNATIONAL SEARCH REPORT

| International application No. |
|---|
| PCT/JP2017/010266 |

| A. CLASSIFICATION OF SUBJECT MATTER |
|---|
| B60W40/10(2012.01)i |

According to International Patent Classification (IPC) or to both national classification and IPC

| B. FIELDS SEARCHED |
|---|

Minimum documentation searched (classification system followed by classification symbols)
B60W40/10

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2016-21653 A  (Aisin Seiki Co., Ltd.),<br>04 February 2016 (04.02.2016),<br>entire text; all drawings<br>& US 2016/0009225 A1<br>entire text; all drawings<br>& EP 2974909 A1 | 1-10 |
| A | WO 2013/145015 A1  (Toyota Motor Corp.),<br>03 October 2013 (03.10.2013),<br>entire text; all drawings<br>& US 2015/0088378 A1<br>entire text; all drawings<br>& CN 104220317 A | 1-10 |

[X] Further documents are listed in the continuation of Box C.          [ ] See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 May 2017 (22.05.17) | 06 June 2017 (06.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

| International application No. |
| --- |
| PCT/JP2017/010266 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2003-309844 A (Nissan Motor Co., Ltd.), 31 October 2003 (31.10.2003), fig. 8 & US 2003/0197660 A1 fig. 21 & EP 1355285 A1 | 1-10 |
| A | JP 2013-203186 A (Honda Motor Co., Ltd.), 07 October 2013 (07.10.2013), claims (Family: none) | 1-10 |

Form PCT/ISA/210 (continuation of second sheet) (January 2015)

**EP 3 437 948 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016065962 A
- JP 2014078776 A